# EUROPEAN PATENT APPLICATION

(11) **EP 1 653 698 A1**
(43) Date of publication of application: **03.05.2006**
(21) Application number: 04300746.7
(22) Date of filing: 28.10.2004
(51) Int. Cl.: H04L 29/06, H04L 29/08

(54) **Improvements In Communication Message Processing**

(71) Applicant: Hewlett-Packard Development Company, L.P., Houston, Texas 77070 (US)
(72) Inventor: Bouat, Sebastien, 38410, St Martin d'Uriage (FR); Grente, Christian, 14600 Honfleur (FR); Racamier, Christian, 78770 La Celle Saint Cloud (FR)
(74) Representative: Lloyd, Richard Graham

(57) **Abstract**

According to one aspect of the present invention there is provided a method in a text-based message-based communication system of sending messages from a first network element to a destination network element for processing thereby. The method comprises at the first element obtaining a message to be sent to the destination element, and determining whether the destination element is able to process a message in a predetermined non-text-based message format. Where it is so determined the method further comprises converting the received message into the predetermined non-text-based message format, and sending the converted message to the destination element.

## Description

The present invention relates generally to improving processing performance in communication systems, and particularly to reducing the microprocessor or CPU burden required to process messages such as communication messages.

There exist a wide variety of different communications protocols which function in many different ways. For example, many communication systems use message-based protocols whereby messages are sent between different network elements to establish and manage communications between those elements. Some of these protocols, such as signalling system 7 (SS7) and the Internet protocol (IP), impose strict limitations on the form of such messages and also the manner in which they may be transmitted. Whilst such protocols may result in messages which are somewhat optimized for transmission speed, bandwidth and ease of computer-based processing, they generally result in messages which are not easily understandable by humans, since the messages are typically designed to be easily machine readable, achievable, for example, through use of binary notation.

Other protocols, such as the session initiation protocol (SIP), and the Hypertext Transfer Protocol (HTTP), however, have been designed primarily to be understandable by skilled technicians. What helps makes such messages understandable is the use of common words for descriptors, tags, headers and the like. By way of example, an extract of a typical SIP message is shown below.

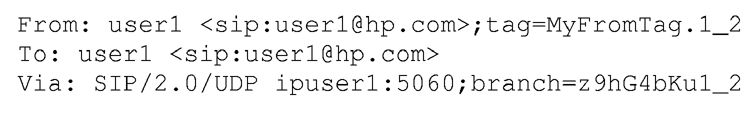

In the above SIP message the From: field indicates the address of the originator of the message, the To: field indicates the address of the destination of the message, the Via: field indicates the path which the message has taken.

Such substantially human understandable messages have a number of disadvantages. For instance, such messages need to be converted into a machine understandable form in order to be processed by a computer. Furthermore, the size of a human understandable message is typically many times larger than that of an equivalent machine readable message. Consequently, the bandwidth required to transmit such a message is also greater than for an equivalent machine readable message.

However, most substantially human understandable message-based protocols have been developed for use in systems where processing power and bandwidth are abundant. In such cases, the advantages brought about by the messages being human-understandable are generally considered to outweigh above-mentioned disadvantages. Consequently, message-based protocols are now widely used.

In situations where bandwidth is limited, for example in mobile telecommunication networks, some protocols, such as SIP, provide message compression mechanisms, enabling messages to be compressed prior to transmission. However, whilst such techniques do help reduce bandwidth required to transmit a message they generally lead to an increase in the CPU burden required to process the messages, since the messages have to be compressed prior to transmission, and decompressed on reception prior to being processed.

Where processing performance is limited the CPU burden may be reduced by using carefully designed software processing routines or computer programs. Such processing routines may be specially written, for example, to take advantage of any hardware-based performance enhancing technologies, such as multi-threading, instruction caches, parallel processing and so on. Such processing routines can also be carefully written to be as efficient as possible.

Although some further performance increase may be achievable through better design of communication protocols, this is generally not possible, especially where the protocols are widely implemented or are standards-based. For example, in the case of standards-related communication protocols any deviation from the standard is likely to result in incompatibility with other network elements implementing the standard. This is generally undesirable especially where interoperability is important.

In many circumstances, however, it is desirable to further reduce the CPU burden required to process communication messages in at least some network elements of a message-based communications protocol.

Accordingly, one aim of the present invention is to overcome or alleviate at least some of the above-mentioned problems.

According to a first aspect of the present invention, there is provided a method in a text-based message-based communication system of sending messages from a first network element to a destination network element for processing thereby. The method at the first element comprises receiving a message to be forwarded to the destination element, and determining whether the destination element is able to process a message in a predetermined non-text-based message format. Where it is so determined, the method further comprises converting the received message into the predetermined non-text-based message format, and forwarding the converted message to the destination element.

Advantageously, this helps reduce the CPU burden of network elements processing such formatted or converted messages. Furthermore, this may enable such elements to increase their processing throughput.

Suitably, the received message includes data, and the step of converting further comprises selecting a portion of the data included in the received message and including the selected portion in the converted message.

Preferably the step of selecting the portion further comprises selecting only data which will be used by the destination element during the processing of the message by the destination element.

Suitably any data not selected is stored for later use.

Preferably the step of converting comprises converting the obtained message into a machine readable format.

Suitably, the destination element receiving the converted message may process the converted message without performing any textual processing of the message.

The method may further comprise receiving a message formatted in the non-text-based message format from the destination element and converting the received message into a text-based message format by inserting the stored data into the transformed message.

Suitably, the step of determining may further comprise exchanging text-based messages between the first element and the destination element.

Suitably the above method steps may be adapted for use with the session initiation protocol.

The step of determining may further comprise the first element inserting into a message sent to the destination element information indicating whether the first element supports the non-text-based message format.

The method may further comprise, where the destination element supports the non-text-based message format, sending a response message to the first element including information indicating that the destination element supports the non-text-based message format.

Suitably, the determination step may be adapted for use with the SigComp negotiation mechanism.

Preferably, when it has been determined that the destination element supports the non-text-based message format, the method further comprises storing details of the determination such that future messages received by the first element for sending to the destination element are sent in the non-text-based message format based on the store determination.

According to a second aspect of the present invention, there is provided a network element comprising means for performing any of the above-mentioned method steps.

Such a network element may be a session initiation protocol network element.

According to a third aspect of the present invention, there is provided a communications network comprising a network element as described above.

According to a fourth aspect of the present invention, there is provided a session initiation protocol network comprising a network element as described above.

Embodiments of the present invention will now be described, by way of example only, with reference to the accompanying drawings, in which:
Figure 1 is a block diagram showing part of a typical SIP network system 100 according to the prior art;
Figure 2 is a flow diagram outlining the conventional processing steps performed during the processing of a SIP message according to the prior art;
Figure 3 is a message flow diagram showing example messages that may flow between the SIP user agent 102a, the proxy 104 and the registrar server 106 according to one embodiment;
Figure 4 is a diagram showing an example SIP message in the enhanced message format according to one embodiment;
Figure 5 is a diagram showing a further example of a SIP message in the enhanced message format according to one embodiment;
Figure 6 is a flow diagram showing example processing steps taken by a SIP element when processing a received message according to one embodiment;
Figure 7 is a flow diagram showing example processing steps taken by a SIP element according one embodiment.

The following description of the various embodiments of the present invention is made predominantly with reference to the Session Initiation Protocol. However, those skilled in the art will appreciate that the present invention is in no way limited for use with SIP, and may be equally applied, with appropriate modification, for use with other suitable communication protocols.

SIP network elements establish and manage communications by way of request and response messages. Each SIP message contains extensive information containing details, for example, of source address, destination address, routing details, call identifiers, sequence numbers and so on, as will be appreciated by those skilled in the art. A SIP message sent from a source element to a destination element is typically routed through one or more intermediate SIP network elements, such as one or more proxy servers and/or one or more back-to-back user agents (B2BUA) before arriving at the destination element. An intermediate element handling a SIP message may add or remove routing information to the message which relates to that element. Other parts of the message, however, are left unchanged.

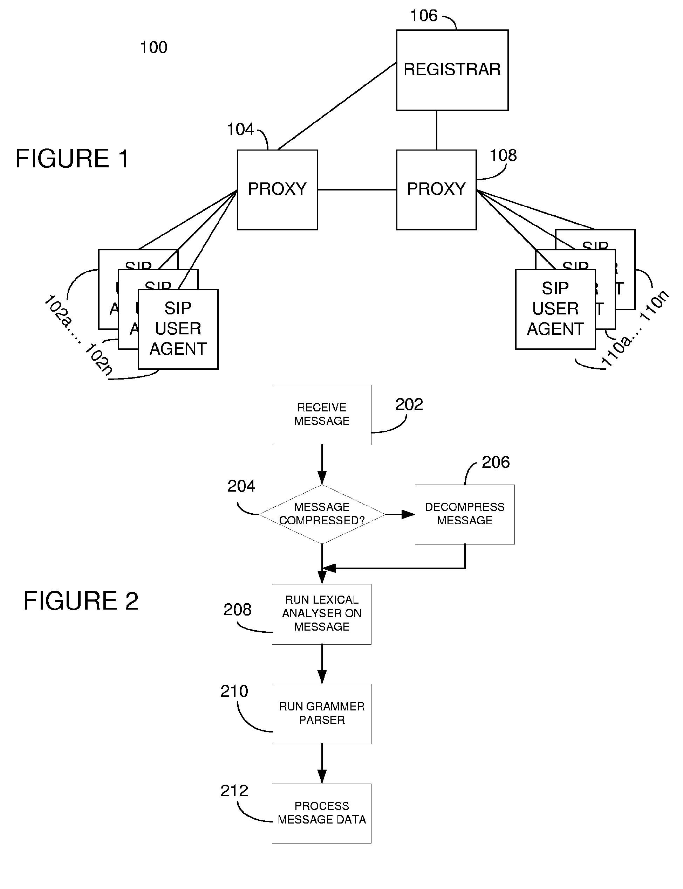

Referring now to Figure 1, there is shown a block diagram showing part of a typical SIP network 100 according to the prior art. The system 100 shows a number of SIP user agents 102a to 102n, such as SIP telephones or push-to-talk enabled mobile telephones which communicate with a SIP proxy server 104. Initial SIP messages sent from any of the SIP user agents 102a to 102n are sent first to the proxy server 104 for forwarding to the appropriate destination. For example, if SIP user agent 102a sends a SIP *REGISTER* message, the message will initially be sent to the SIP proxy 104, and then will be forwarded by the proxy server 104 to the SIP registrar server 106. Additional SIP user agents 110a to 110n may also be present in the SIP network and be configured to use a further SIP proxy 108.

Each of the elements 102a to 102n, 104, 106, 108 and 110a to 110n use SIP compliant SIP protocol stacks for receiving and transmitting messages to other network elements in the network 100.

An example SIP *INVITE* message is shown below.

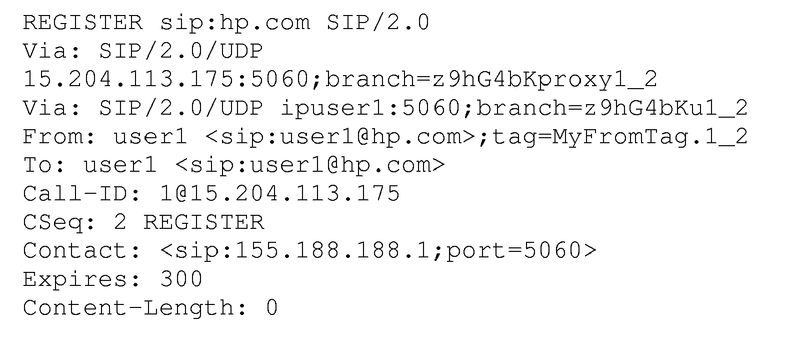

As can be seen, and as already mentioned, SIP messages are text-based. The message format defined by SIP allows significant flexibility in the way in which a SIP message may be structured. For instance, SIP does not specify, for many headers, the order in which they should appear in a SIP message. Furthermore, SIP headers are generally case indifferent and SIP stacks from different vendors may construct messages in different ways. Thus it is usual to have SIP messages which are logically equivalent whilst being syntactically different. However, it is important that all SIP stacks are compatible with one another to ensure interoperability between different SIP elements from different vendors.

The way in which conventional SIP network elements process a SIP message is shown in Figure 2, which is a flow diagram outlining the conventional processing steps performed during the processing of a SIP message according to the prior art.

When a SIP message is received (step 202) by a network element the element initially determines whether the message has been compressed (step 204), for example using the SigComp compression mechanism supported by SIP. If the message has been compressed, the message is decompressed (step 206) for example, by executing decompression byte code in a Universal Decompression Virtual Machine (UDVM), as will be apparent to those skilled in the art. The decompressed or uncompressed message is processed by a lexical analyser (208) which extracts header information, parameter data, and the like from the SIP message. The output of the lexical analyser is then processed by a grammar parser (step 210) which makes sense of the information extracted by the lexical analyser and creates a machine understandable format which may be processed (step 212) by the SIP network element in the appropriate manner.

Due to the number of different ways in which a SIP message conveying the same information may be constructed the lexical analyser has to be able to extract the header information, parameter data and the like, irrespective of the message formatting. For example, the lexical analyser has to be able to cope with upper and lower case characters, equivalent variants of header separation such as line-feed characters, spaces, semi-colon, tab characters, and so on. Although lexical analysers are generally fairly efficient they are still somewhat processor intensive.

Some situations can lead to certain SIP network elements having to cope with a large number of concurrent processing operations. Such a situation is illustrated in Figure 1 in which a single SIP registrar server 106 acts as the registrar server for the whole SIP network 100. In this situation, not only is the registrar server 106 a critical point in the network 100, but the registrar server 106 may also have to receive and process SIP *REGISTER* messages from hundreds or thousands of SIP user agents 102a to 102n and 110a to 110n. Due to the quantity of SIP *REGISTER* messages which the registrar server 106 is likely to have to process it is desirable that the CPU burden required to process *REGISTER* messages is reduced where possible, thereby likely increasing the message throughput of the registrar server 106.

The present embodiment aims to reduce the CPU burden of processing SIP messages by converting or formatting some messages into a new enhanced message format. The conversion is done in such a way as to reduce the number of processing steps required to be performed by an element receiving such a message. A reduction in the number of processing steps enables the CPU burden of a network element receiving and processing such SIP messages to be reduced. In this way, a network element receiving a message in the enhanced message format may process the message using less processing resource than would be needed to process an equivalent conventional text-based SIP message. To enable two SIP network elements to send and receive messages using the new enhanced format the embodiments also provide new negotiation mechanisms.

However, to ensure interoperability between different SIP network elements, it is important that, from an external point of view at least, use of the new enhanced message format remains compatible with the SIP specifications.

A first embodiment provides a new message format which has been designed to reduce the CPU burden required to process SIP messages. The new message format, hereinafter referred to as the enhanced message format (EMF), is a message format having a fixed message structure and being substantially devoid of redundant data. Preferably the message is a machine readable message.

For example, below is shown an example of a conventional SIP *REGISTER* message according to the prior art as sent, for example, from the SIP user agent 102a to the SIP registrar server 106 via the proxy server 104.

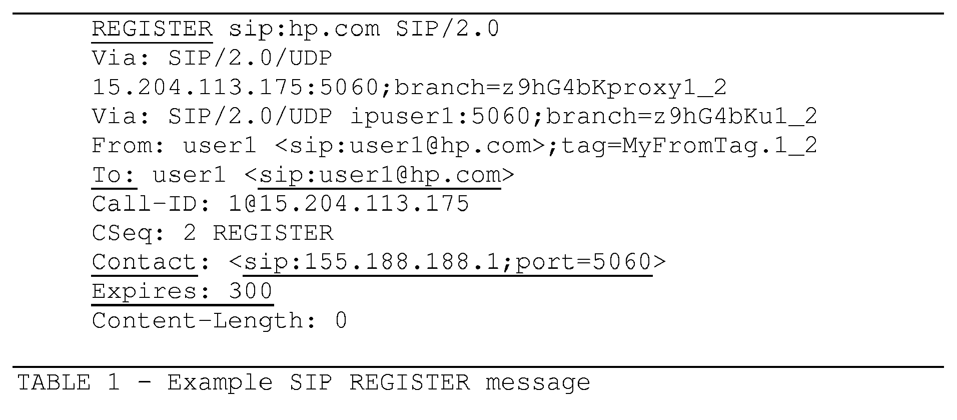

Conventionally, intermediate SIP elements have preserved all of the information contained therein (apart from any element specific routing information). However, it has been realised that in some circumstances it is possible to identify and remove redundant information from a SIP message without causing any negative effects.

Take for example the case shown in Figure 1 where the proxy 104 forwards a SIP *REGISTER* message from the SIP user agent 102a to the SIP registrar server 106. Since the destination of the *REGISTER* message is the registrar server 106, the proxy 104 can remove information from the SIP *REGISTER* message which it knows the registrar server 106 will not use. This can be done, for instance, since the message terminates at the registrar server 106 and thus there is no risk that the removed information is going to be needed by a different network element.

In the example *REGISTER* message shown in Table 1 the underlined text (which is only used for the purposes of illustration and is not normally present in SIP messages) indicates the information which is essential to the registrar server 106. All of the other information is superfluous and is not normally used by the registrar server 106. However, the presence of such information in a conventional SIP message complicates the extraction of the information which is essential to the registrar server 106.

Thus, by using a fixed message structure substantially devoid of redundant information enables such messages to be processed in an efficient manner. The efficiency comes in part from not having to transform a text-based message into a machine readable message, and in part from the fixed structure of the message which enables efficient processing routines to be used. Such an approach may lead to an important reduction in the processing burden required compared to processing an equivalent conventional SIP message using conventional a lexical analyser and grammar parser.

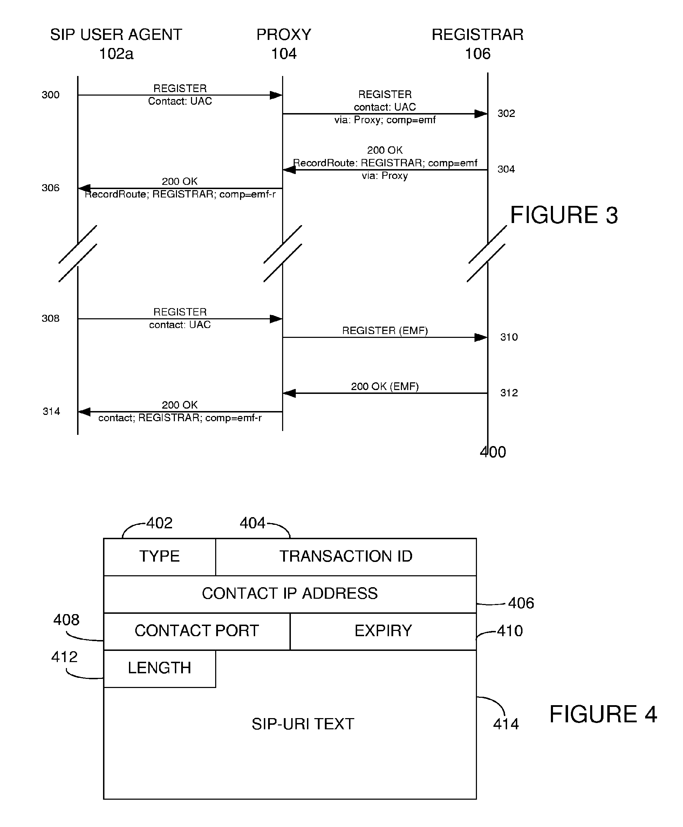

Figure 4 shows how a text-based SIP *REGISTER* message, such as that shown in Table 1, may be converted or formatted into an EMF message 300 according to the present embodiment.

In Figure 4:
- Type, 402, is a byte indicating the message type (e.g. *REGISTER, INVITE, 200 OK,* etc)
- Transaction ID, 404, is a 3-byte integer identifying uniquely this *REGISTER* transaction (typically matching one-to-one with SIP tags and Call-Id)
- Contact IP address, 406, is the IP address of the SIP "Contact" header (155.188.188.1 in example above)
- Contact port, 408, is the port of the SIP "Contact" header (5060)
- Expiry, 410, matches the SIP "Expires" header (300)
- Length, 412, is the length of the SIP-URI of the "To" header (16).
- SIP-URI text, 414, is the text representation of this URI (sip:userl @hp.com).

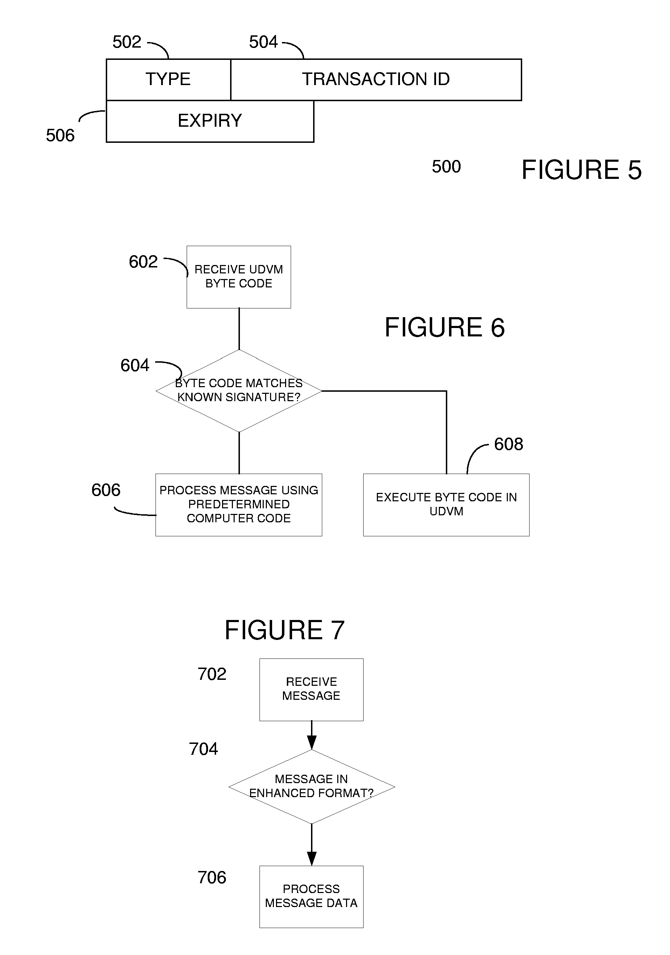

Similarly, a conventional *200 OK* message is shown below in Table 2, and a corresponding optimized 200 OKEMF message, 400, is shown in Figure 5.

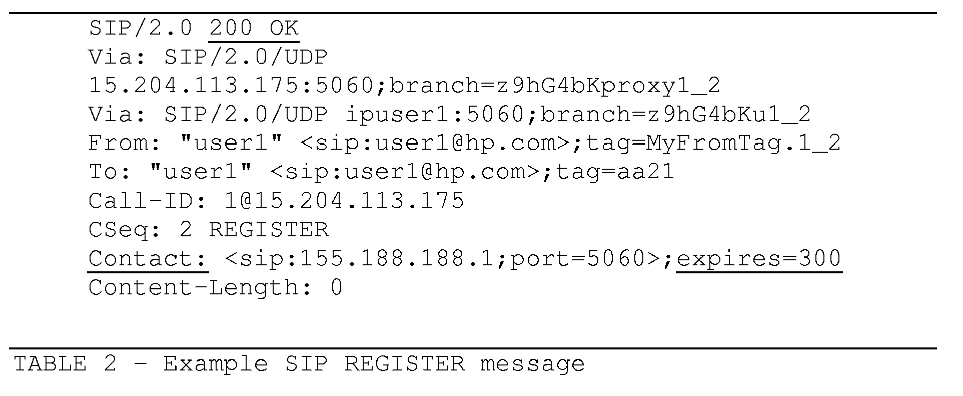

In Figure 5:
- Type, 502, is a byte indicating the message type (e.g. a 200 OK response)
- Transaction ID, 504, is a 3-byte integer identifying uniquely this REGISTER transaction (typically matching one-to-one with SIP tags and Call-Id)
- Expiry, 506, returns the registration expiry delay as decided by the registrar (300 in example above)

Prior to being able to use the enhanced message format, however, two SIP elements need to determine whether messages can be sent between each other in the EMF format. Since SIP is a request/response protocol, a SIP element may only send a SIP message to initiate a new request (in which case a new request message is sent), in response to a previously received request, or in response to a previously received response message.

Thus the SIP proxy 104 is unable to communicate directly with the registrar server 106 for the sole purpose of establishing whether the registrar server 106 supports the new optimized message format, since SIP does not provide a direct negotiation mechanism which is suitable for such use.

The present embodiment, however, uses a mechanism based on the existing SigComp negotiation mechanism for enabling two network elements to determine whether they both support the new enhanced message format, and for allowing future message exchanges between the elements to use the new enhanced format.

Referring now to Figure 3, there is shown an example message flow diagram showing example messages that may flow between the SIP user agent 102a, the proxy server 104 and the registrar server 106 according to the present embodiment. Note that for clarity not all header fields are shown.

The SIP user agent 102a sends a conventional *REGISTER* message 300 to the proxy server 104. The *REGISTER* message 300 includes a Contact header, which identifies the originator of the message, in this case the user agent 102 (UAC).

The proxy server 104, which supports the enhanced message format, receives a *REGISTER* message 300 and is configured to forward it to the registrar server 106. The proxy server 104 adds to the *REGISTER* message 300 a Via: header, indicating the address of the proxy server 104, and adds a parameter comp=emf to the message, as shown in message 302, indicating that the proxy server 104 supports the enhanced message format. The message 302 is forwarded to the registrar server 106 in the conventional text-based format.

The registrar server 106 responds to the *REGISTER* message 302 with a *200 OK* message 304. The message 304 identifies the registrar server 106 as the originator of the response message, as indicated by the Record-Route header. Since the registrar server 106 supports the EMF format, it adds the parameter comp=emf to its address in the RecordRoute header. The comp=emf parameter indicates that the registrar server 106 also supports the EMF format. The message 304 is sent to the proxy 104 in the conventional uncompressed format.

The proxy 104 receives the message 304 and from this point is aware, from the contact header, that the registrar 106 also supports the EMF. The proxy 104 stores this information in a suitable persistent context store, and forwards the message 306 to the SIP user agent 102a, again in the conventional uncompressed text format.

When the proxy server 104 receives a subsequent *REGISTER* message 308 the proxy 104 identifies the message 308 as being destined for the registrar server 106 and further recognises from the stored context that the registrar server 106 supports the EMF. The proxy server 104 then formats the message in the enhanced message format, as detailed above, and sends the EMF formatted message 310 to the registrar 106.

Example processing steps performed by the SIP element receiving a message in the EMF format are outlined in Figure 7. The registrar server 106 receives (step 702) the message 310, and determines that the message is in the enhanced message format (step 704). The registrar server 106 may, for example, recognise any message not starting with the ASCII characters "SIP" as being in the enhanced message format. Alternatively, the EMF format may be arranged to start with a recognisable ASCII sequence, such as "SIP-EMF".

The message is then processed (step 706). Advantageously, since the received message is in the enhanced message format, the message has a fixed structure and only contains information which is required by the registrar server 106. The processing routine used in step 706 thereby enables the registrar server 106 to efficiently process the message since the message processing does not have to perform any text-based processing, does not have cater for messages arriving in a multitude of different formats, and does not have to process information which is not used by the registrar server 106, unlike the conventional processing techniques used for processing convention text-based SIP messages. Use of the enhanced message format therefore may reduce the CPU burden of the SIP registrar 106, enabling, for instance, greater message processing throughput.

Upon processing the message, the registrar responds with a *200 OK* message. The registrar may either respond with a conventional text-based *200 OK* message, or preferably responds with a *200 OK* message suitably formatted in the enhanced message format, such as detailed above with reference to Figure 5. The registrar sends the *200 OK* message in the EMF format to the proxy server 104. Since the message 312 received by the proxy 104 does not contain all of the information normally contained in a SIP message, the proxy 104 has to ensure that the *200 OK* response message 314 sent on to the SIP user agent 102a is a valid SIP message. To this, the proxy 104 inserts sufficient information into the message 314 so that the message will not be rejected as being non-compliant with the SIP specification. This may be done by the proxy server 104 keeping a temporary record or context of the information not sent to the registrar server 106, and using this information along with the information received in the EMF message to construct a valid SIP response message.

It should be noted that, although the parameter *comp=emf* in the message 302 does not conform with the current SIP specification, SIP specifies that a SIP element should ignore any unknown parameter or attribute. Thus, the insertion of the parameter *comp=emf* into a message received by a SIP element not utilising the enhanced message format will not cause the SIP element to reject the message as being non-SIP compliant. For example, a registrar server not utilising the enhanced message format would simply ignore the *comp=emf* parameter and any response message sent by the registrar server would therefore not include the *comp=emf* parameter, thereby not enabling future messages to be sent in the enhanced message format.

In an alternative embodiment, use of the existing SigComp mechanism is made for use with modified SigComp compliant network elements, as described below.

A SigComp compliant network element wishing to use SigComp message compression with another SigComp compliant network element must first establish whether the other network element is indeed SigComp compliant. This is achieved, as will be appreciated by those skilled in the art, in a manner similar to that described above, by adding a *comp=SigComp* parameter to a message, as is defined in IETF RFC 3320.

The decompression functionality for SigComp is provided by a universal decompressor virtual machine (UDVM) optimized for the task of running decompression algorithms. A compressor may choose any algorithm to generate a compressed SigComp message as long as the compressor also provides UDVM byte code for the corresponding decompression algorithm. The UDVM byte code may be provided as part of the SigComp message, or may be obtained by the decompressor directly from the compressor. The decompression of a compressed message is achieved by executing the received byte code in the UDVM to decompress the message. The decompressed message can then be processed in the normal manner.

In the present embodiment, UDVM byte code is used not to provide a decompression algorithm but to provide a recognisable signature which is detectable by the SIP network element receiving or obtaining the UDVM byte code, as described below.

The operation of such a modified SigComp compliant SIP network element according to the present embodiment is shown with reference to Figure 6. When a SIP network element receives UDVM byte code (step 602), a check is made (step 604) to determine whether the signature of the UDVM byte code matches a predetermined signature. If the signature matches the predetermined signature, this indicates to the decompressor that the received SIP message is not a SigComp compressed message, but is a message in the above-described EMF format. Once this has been determined, the SIP element executes (step 606) predetermined computer program code, which is preferably pre-compiled, to process the received message.

If the received UDVM byte code does not match the predetermined signature, the byte code is executed by the UDVM in the normal manner (step 608).

It is important to note, though, that the SigComp UDVM only functions to decompress received compressed messages, and cannot be used to process a message in the enhanced message format.

As it can be seen from the above description, the present embodiment may significantly reduce the CPU burden of the registrar server 106 for processing SIP *REGISTER* messages, even if the proxy server may have a slightly increased CPU burden as a result of converting the conventional text-based SIP message into the new enhanced message format. This is generally acceptable as a registrar server is typically an essential and functionally centralised element of a SIP network, as it holds details of route mappings between SIP URIs and the IP addresses of SIP devices, such as SIP user agents 102a to 102n. Although proxy servers are generally easily scalable, for example by using a cluster of proxy servers, scaling registrar servers is typically more complicated and costly. One reason for this is that the registrar server contains a database of the SIP URIs of devices on the SIP network, and their corresponding current IP addresses. As is well known in the art, scaling of database systems typically requires complex replication and management mechanisms to ensure that data received from multiple sources is suitably collected and is coherent. Thus, since it is generally not desirable to have a scalable registrar server, it is desirable to have a registrar server which is efficient and which is capable of handling a high throughput of *REGISTER* messages.

Since, however, proxy servers may be easily scaled, the processing load on a proxy server is typically somewhat lower than the processing load on a registrar server. Thus, it is advantageous to make use of the available processing power on SIP proxy servers to format SIP messages into an enhanced message format to ultimately reduce the CPU burden of processing such messages on a registrar server.

Those skilled in the art will appreciate that above-described techniques are in no way limited for use with SIP registrar servers, proxy servers, and *REGISTER* messages, but may be applied equally in other similar situations as appropriate.

## Claims

1. A method in a text-based message-based communication system of sending messages from a first network element to a destination network element for processing thereby, comprising at the first element:
obtaining a message to be sent to the destination element;
determining whether the destination element is able to process a message in a predetermined non-text-based message format;
and, where it is so determined, converting the received message into the predetermined non-text-based message format; and
sending the converted message to the destination element.

2. A method according to claim 1, wherein the obtained message includes data, and wherein the step of converting further comprises selecting a portion of the data included in the obtained message and including the selected portion in the formatted message.

3. A method according to claim 2, where in the step of selecting the portion further comprises selecting only data which will be used by the destination element during the processing of the message by the destination element.

4. A method according to claim 2 or 3, further comprising storing any data not selected.

5. A method according to claim 1, 2, 3 or 4, wherein the step of converting comprises converting the obtained message into a machine readable format.

6. A method according to any previous claim, further comprising the destination element receiving the converted message and processing the converted message without performing any textual processing of the message.

7. A method according to claim 5 or 6, further comprising, receiving a message formatted in the non-text-based message format from the destination element and converting the received message into a text-based message by inserting at least some of the stored data into the transformed message.

8. A method according to any previous claim, wherein the step of determining further comprises exchanging text-based messages between the first element and the destination element.

9. A method according to any previous claim, adapted for use with the session initiation protocol.

10. A method according to claim 9, wherein the step of determining further comprises the first element inserting into a message sent to the destination element information indicating whether the first element supports the non-text-based message format.

11. A method according to claim 10, further comprising, where the destination element supports the non-text-based message format, sending a response message to the first element including information indicating that the destination element supports the non-text-based message format.

12. A method according to claim 9, 10, or 11, adapted for use with the SigComp negotiation mechanism.

13. A method according to any previous claim, further comprising, when it has been determined that the destination element supports the non-text-based message format, storing details of the determination such that future messages received by the first element for sending to the destination element are sent in the non-text-based message format based on the store determination.

14. A network element comprising means for performing steps as claimed in any of claims 1 to 13.

15. A SIP network element comprising means for performing steps as claimed in any of claims 1 to 13.

16. A communications network comprising a network element as claimed in claim 14.

17. A session initiation protocol network comprising a network element as claimed in claim 15.
